# EUROPÄISCHE PATENTSCHRIFT

(11) **EP 3 061 561 B1**
(45) Veröffentlichungstag und Bekanntmachung des Hinweises auf die Patenterteilung: **16.11.2022**
(21) Anmeldenummer: 16152887.2
(22) Anmeldetag: 27.01.2016
(51) Int. Cl.: B23K 26/34, B23K 103/18, B23P 15/00, B23K 101/00

(54) **VERFAHREN ZUR HERSTELLUNG EINES BAUTEILS UND DAS ENTSPRECHENDE BAUTEIL**
METHOD FOR PRODUCING A COMPONENT AND THE COMPONENT
PROCÉDÉ DE FABRICATION D'UN COMPOSANT ET COMPOSANT CORRESPONDANT

(30) Priorität: 24.02.2015 DE 102015203234
(43) Veröffentlichungstag der Anmeldung: 31.08.2016
(73) Patentinhaber: MTU Aero Engines AG, 80995 München (DE)
(72) Erfinder: Göpfert, Dagobert, 81825 München (DE); Gindorf, Alexander, 85247 Schwabhausen (DE); Klemm, Marcus, 82205 Gilching (DE)

(56) Entgegenhaltungen:
- EP-A1- 2 312 123
- EP-A2- 2 472 070
- DE-A1-102007 017 753
- DE-A1-102009 018 685

## Beschreibung

Anspruchs 1, Ein solches Verfahren ist aus EP 2 472 070 A bekannt.Die Erfindung betrifft ferner ein Bauteil hergestellt nach einem solchen Verfahren.

Bestimmte Bauteile von Gasturbinen, wie Gehäuse, weisen an ihren axialen Enden radial nach außen gerichtete Flansche auf. Da die Gehäuse eine bestimmte Festigkeit bei gleichzeitig möglichst geringem Gewicht aufweisen müssen, so dass beispielsweise keine rotierenden Teile, wie Laufschaufeln, die Gehäusewandung durchschlagen können, werden diese Bauteile vorzugsweise geschmiedet. Die Gehäusewandung weist femer häufig Funktionselemente wie Haken, Ösen, Verstärkungsrippen und/oder Verstärkungen für Boroskop- und Kühlluftaugen auf. Manche solcher Funktionselemente lassen sich nicht ohne weiteres durch Schmieden abbilden. Daher wird an den Stellen, an denen am später fertigen Gehäuse die Funktionselemente angeordnet sind, beim Schmieden ausreichend Material angeformt. Dies führt dazu, dass die Funktionselemente aus dem Schmiederohteil herausgefräst werden müssen. Beim Schmieden wird allerdings über den gesamten Umfang des Gehäuses das für das Funktionselement benötigte Aufmaß an Werkstoff geformt. Allerdings sind die Funktionselemente nur an bestimmten Stellen des Umfangs angeordnet, so dass an den Stellen des Umfangs, an denen keine Funktionselemente angeordnet sind, eine große Masse an Werkstoff bis auf die Dicke der Gehäusewandung umständlich abgefräst werden muss. Ein kostengünstigeres spanendes Verfahren, wie das Drehen, steht nicht zur Verfügung, da die Gehäusewandung mit den Funktionselementen in diesen Bereichen in der Regel nicht symmetrisch ist.

Bei der Herstellung der Gehäuseflansche gibt es zwei Vorgehensweisen. In der ersten Vorgehensweise weist das Schmiederohteil über die gesamte axiale Länge die radiale Ausdehnung des Flansches auf. Die radiale Ausdehnung des fertigen Gehäuses auf der Höhe des Flansches beträgt beispielsweise 30 mm. Die Dicke der Gehäusewandung kann beispielsweise nur noch 4 mm betragen. Damit müsste bis zu 26 mm Material über annähernd die gesamte axiale Länge des Gehäuses abgetragen werden. Dies ist langwierig, teuer und damit nicht wirtschaftlich. In der zweiten Vorgehensweise werden beim Schmieden die Flansche ebenso mitgeformt, allerdings beträgt das Aufmaß auf der axialen Höhe der Gehäusewandung beispielsweise nur noch 20 mm. Die Überstehenden 10 mm der Flansche bilden in diesem Fall Hinterschneidungen in der Schmiedeform bzw. Gussform. Damit diese Flansche beim Schmieden mitgeformt werden können, sind dann mehr als zwei Gesenke notwendig, um das Rohteil aus der Form entnehmen zu können. Dies hat den Nachteil, dass die Herstellkosten für das Rohteil zunehmen.

Aus der EP2472070A ist ein Verfahren zur Herstellung eines Gehäuses für eine Gasturbine bekannt, bei dem ein oder mehrere Ringe an einem Gehäusesegment mittels Schweißen angebracht werden.

Somit liegt der vorliegenden Erfindung die Aufgabe zu Grunde, ein Verfahren zur Herstellung eines Bauteils, nämlich ein Gehäuse einer Gasturbine, vorzustellen, das schneller, günstiger und präziser ist.

Die Aufgabe wird durch die Merkmale des Anspruchs 1 gelöst. Die Aufgabe wird ferner durch die Merkmale des Anspruchs 14 gelöst.

Dies hat den Vorteil, dass das Gewicht des Bauteils geringer wird und sich die Herstellkosten um bis zu 10% reduzieren.

In einer weiteren vorteilhaften Ausgestaltung der Erfindung weist das Schmiederohteil im Wesentlichen die Form eines Kegelstumpfs auf. Dies hat den Vorteil, dass das Schmiederohteil stark vereinfacht wurde. Insbesondere weist das Schmiederohteil keine Hinterschneidungen auf. Dabei werden die Kosten für die Gesenke sehr stark reduziert. Für eine solche einfache Rohteilgeometrie ohne Hinterschneidungen werden nur zwei Gesenke benötigt. Außerdem hat die Mantelfläche des Kegelstumpfes die Festigkeit eines Schmiedebauteils, so dass dort die Wandstärken dünner ausfallen können als bei einem Gusswerkstoff. Dies hat wiederum zur Folge, dass das fertige Bauteil leichter wird.

In einer weiteren vorteilhaften Ausgestaltung der Erfindung ist an mindestens einem axialen Ende des Kegelstumpfes ein Flanschbereich angeformt, der den Kegelstumpf parallel zu dessen Symmetrieachse verlängert. Vorzugsweise weisen beide Enden des Kegelstumpfes parallel zur Symmetrieachse verlaufende Flanschbereiche auf. Dies hat den Vorteil, dass das Rohteil mit einfachen Gesenken geschmiedet werden kann. Insbesondere kann die Gesenkrichtung entlang der Symmetrieachse verlaufen. An diesen Flanschbereichen werden später andere Bauteile vorzugsweise angeschraubt. Daher ist es wichtig, dass diese Flanschbereiche eine hohe Festigkeit (bspw. die von Schmiedewerkstoffen) aufweisen. Außerdem lassen sich damit Rohteilkosten von 25% bis zu 40% einsparen.

In einer weiteren vorteilhaften Ausgestaltung der Erfindung wird in Schritt b.) das zusätzliche Material mit einem Aufmaß von maximal 1 mm, insbesondere von maximal 0,5 mm, gegenüber der Endkontur des fertigen Bauteils aufgetragen. Dies hat den Vorteil, dass der Aufwand beim späteren Entfernen von überschüssigem Material gering ausfällt. Außerdem lassen sich damit die Kosten für das zusätzliche Material einsparen.

In einer weiteren vorteilhaften Ausgestaltung der Erfindung wird in Schritt b.) das zusätzliche Material schichtweise aufgetragen. Dies bietet die Möglichkeit eine Schicht mit einer bestimmten Zusammensetzung aufzutragen und eine andere Schicht mit einer anderen Zusammensetzung aufzutragen.

In einer weiteren vorteilhaften Ausgestaltung der Erfindung wird in Schritt b.) nur an der mindestens einen Stelle Material aufgetragen, die in der Endkontur aus der ursprünglichen Oberfläche des Schmiederohteils herausragt. Dies bietet die enorme Möglichkeit das Auftra geverfahren auf das vorausgehende Schmiedeverfahren abzustimmen. Beim Schmieden, weist das Rohteil eine vereinfachte Geometrie auf. Dabei wird die Außenkontur des Schmiederohteils soweit optimiert, dass einerseits endkonturnah geschmiedet wird, so dass später nur noch wenig Material abgetragen werden muss und andererseits nur noch an wenigen Stelle Material aufgetragen werden muss. Die mit Material aufzutragenden Stellen sind insbesondere Bereiche, die sich schlecht oder gar nicht durch Schmieden herstellen lassen oder aber nur punktuell über die Oberfläche des Schmiedeteils ragen. Insbesondere wird das Verfahren derart optimiert, dass minimal Material vom Schmiederohteil abgetragen und minimal neues Material aufgetragen werden muss. Damit lassen die Herstellkosten und Materialkosten enorm reduzieren.

Gemäß der Erfindung wird in Schritt b.) das Material derart aufgetragen, dass ein Funktionselement des Bauteils entsteht. Funktionselemente sind beispielsweise Anbauteile am Bauteil wie Haken, Ösen etc. Es können auch Flanscherweiterungen und/oder Verstärkungen für Boroskop und/oder Kühlluftaugen sein. Ferner können es auch Verstärkungsstreben bzw. Verstärkungsrippen sein, die beispielsweise ein Turbinenmittelgehäuse (turbine center frame) mit der Nabe der Gasturbine verbinden.

In einer weiteren vorteilhaften Ausgestaltung der Erfindung ist das Funktionselement eine an einem axialen Ende des Flanschbereichs senkrecht zur Symmetrieachse und radial nach außen verlaufende Flanscherweiterung. Flansche, bestehend aus einem geschmiedeten Flanschbereich und einer aufgetragenen Flanscherweiterung, bieten mit diesem Verfahren das größte Vereinfachungspotential an.

In einer weiteren vorteilhaften Ausgestaltung der Erfindung ist in Schritt b.) der Werkstoff des zusätzlichen Materials anders als der Werkstoff des Schmiederohteils. So kann beispielsweise das Schmiederohteil aus Ti-64 hergestellt sein und die Funktionsbereiche aus Ti 6242 hergestellt sein. Eine andere Materialpaarung kann IN625 für das Rohteil und IN718 oder DA718 für das zusätzlich aufgebrachte Material sein. Insbesondere wird jede Belastungszone am Bauteil mit einem entsprechenden Werkstoff versehen, der die geforderte Festigkeit erfüllt. In einer weiteren vorteilhaften Ausgestaltung der Erfindung wird in Schritt c.) Material nur an mindestens einer Funktionsstelle abgetragen. Funktionsstellen, insbesondere Funktionsflächen, sind beispielsweise Öffnungen, Augen, Bohrungen und/oder Auflageflächen der Flansche. Diese Funktionsstellen müssen eine vorgegebene Maßhaltigkeit einhalten, so dass das Bauteil beim Einbau kompatibel mit anderen Bauteilen ist. Andere Flächen brauchen nicht nachbearbeitet zu werden. Insbesondere wird in Schritt b.) aufgetragenes Material nicht abgetragen.

In einer weiteren vorteilhaften Ausgestaltung der Erfindung erfolgt in Schritt c.) das Abtragen mechanisch und/oder elektro-chemisch. Das mechanische Abtragen erfolgt durch Drehen und/oder Fräsen, wobei insbesondere ein möglichst geringer Teil gefräst werden soll, da das Fräsen einen sehr zeit- und kostenaufwendigen Fertigungsschritt darstellt. Das elektrochemische Abtragen (ECM - electro chemical manufacturing) findet in einem Bad aus Elektrolyt statt. Das Rohteil wird positiv als Anode angeschlossen und das Werkzeug wird negativ als Kathode angeschlossen. Zwischen den Beiden fließt ein Strom, wobei sich dann der Werkstoff des Rohteils im Elektrolyt auflöst.

In einer weiteren vorteilhaften Ausgestaltung der Erfindung wird zwischen den Schritten a.) und b.) eine Anlagefläche in das Schmiederohteil eingearbeitet. Insbesondere wird im Inneren des Flanschbereichs des Schmiederohteils eine Anlagefläche gedreht. Diese Anlagefläche lässt sich präzise herstellen und dient als Bezugsfläche für die weitere Bearbeitung, da das Schmiederohteil darüber eingespannt und zentriert werden kann.

In einer weiteren vorteilhaften Ausgestaltung der Erfindung wird zwischen den Schritten b.) und c.) das Schmiederohteil mit zusätzlichem Material wärmebehandelt. Dies dient dazu mechanische Spannung im Werkstoff aufzulösen. Die Wärmebehandlung kann global über einen Ofen erfolgen. Die Wärmebehandlung kann aber auch lokal mittels eines Laser bzw. einer Induktionsspule erfolgen.

Weitere vorteilhafte Ausgestaltungen der Erfindung sind in den Unteransprüchen wiedergegeben.

Im Weiteren werden anhand der schematischen Zeichnung bevorzugte Ausführungsbeispiele der Erfindung näher beschrieben. Dabei zeigen:
- - Figur 1:: eine Seitenansicht eines Rohteil für ein Gehäuse,
- - Figur 2:: eine Vorderansicht des Rohteils aus Figur 1, und
- - Figur 3:: einen Schnitt entlang der Linie III-III in Figur 3.

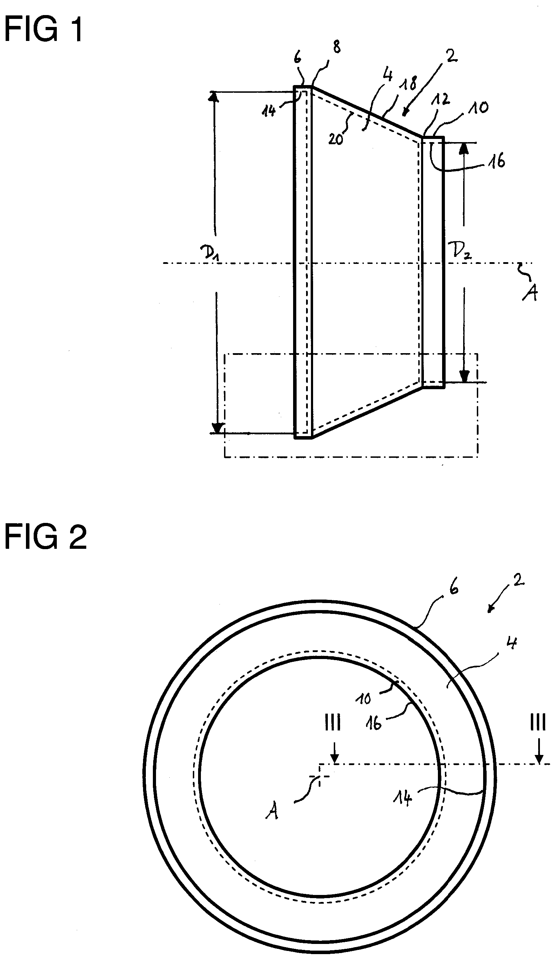

Die Figuren 1 und 2 zeigen ein rotationssymmetrisches Schmiederohteil 2, das einen Kegelstumpf 4, einen ersten Flanschbereich 6, der am ersten axialen (in der Figur 1 linken) Ende 8 des Kegelstumpfs 4 angeformt ist, und einen zweiten Flanschbereich 10 aufweist, der in der Figur 1 am zweiten axialen (in der Figur 1 rechten) Ende 12 des Kegelstumpfs 4 angeformt ist. Die beiden Flanschbereiche 6 und 10 verlaufen parallel zur Symmetrieachse A, wobei der erste Innendurchmesser D₁ des ersten Flanschbereichs 6 größer ist als der zweite Innendurchmesser D₂ des zweiten Flanschbereichs 10.

Das Rohteil 2 kann beispielsweise aus einem zylinderförmigen Rohr mit einem Innendurchmesser geschmiedet werden, der etwas kleiner ist als der zweite Innendurchmesser D₂. Dabei weist ein äußeres Gesenk die äußere Form des Rohteils 2 auf und ein inneres Gesenk die innere Form des Rohteils 2 auf. Das äußere Gesenk könnte in der Figur 1 rechts angeordnet sein und das innere Gesenk könnte in der Figur links angeordnet sein. Das innere Gesenk verschiebt sich mit hohem Druck entlang der Symmetrieachse A und drückt die glühende Masse des Rohrs in das äußere Gesenk, so dass die Form des Schmiederohteils 2 entsteht. Nach dem Abkühlen auf Raumtemperatur können die Innenflächen der Flanschbereiche 6 und 10 spanend auf Maß gedreht werden, so dass die dedizierten Anlageflächen 14 und 16 entstehen. Das Rohteil 2 wird bei der weiteren Bearbeitung an mindestens einer dieser Anlageflächen 14 und 16 eingespannt und zentriert.

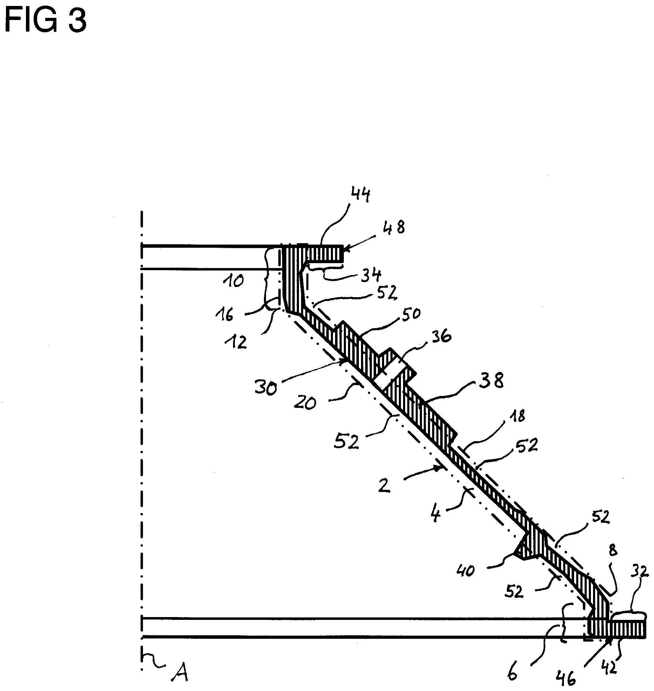

In der Figur 3 ist ein Schnitt entlang der Linie III-III in Figur 2 abgebildet. Der Schnitt des Rohteils 2 ist lediglich als strich-doppelpunktierte Linie dargestellt. Ferner entspricht die Darstellung in Figur 3 im Wesentlichen einer Vergrößerung des strichpunktierten Ausschnitts aus Figur 1, wobei die Vergrößerung gegenüber dem Ausschnitt um 90° entgegen dem Uhrzeigersinn gedreht ist. Ebenso ist ein Schnitt durch ein fertiges Gehäuse 30 als durchgezogene Linien abgebildet. Diese Darstellung zeigt, an welchen Stellen am Schmiederohteil 2 neues Material aufgetragen werden muss bzw. Material des Schmiederohteils 2 abgetragen werden kann. So ist am axialen Ende des ersten Flanschbereichs 6 (hier nun unten abgebildet) eine radial nach außen verlaufende erste Flanscherweiterung 32 angeformt. Analog ist am axialen Ende des zweiten Flanschbereichs 10 (hier nun oben abgebildet) eine radial nach außen verlaufende zweite Flanscherweiterung 34 angeformt. Diese beiden Flanscherweiterungen 32 und 34 ragen über die ursprüngliche Außenfläche 18 des Schmiederohteils 2 hervor. Diese Flanscherweiterungen 32 und 34 verlaufen rotationssymmetrisch über den gesamten Umfang des Gehäuses 30.

Im oberen Drittel kann das Gehäuse 30 ein Boroskopauge 36 oder dergleichen aufweisen, um die eine Boroskopverstärkung 38 angeordnet sein kann. Ein Teil dieser Boroskopverstärkung 38 ragt über die ursprüngliche Außenfläche 18 des Schmiederohteils 2 hervor. Solche Boroskopaugen 36 mit Verstärkungen 38 sind beispielsweise nur alle 60° über den Umfang angeordnet, so dass insgesamt sechs gleichmäßig über den Umfang verteilte Boroskopaugen vorhanden sind. Auch ist eine unregelmäßige Verteilung über den Umfang denkbar.

Im unteren Drittel weist das Gehäuses 30 auf der Innenseite eine rotationssymmetrische Verstärkungsstrebe 40 auf, die über die ursprüngliche Innenfläche 20 des Schmiederohteils 2 hervorragt. Die Flanscherweiterungen 32 und 34, die Boroskopverstärkung 38 und die Verstärkungsstrebe 40 können allgemein als Funktionselemente des Gehäuses 30 bezeichnet werden. Dabei wird ein erster Flansch 46 aus dem ersten Flanschbereich 6 und der ersten Flanscherweiterung 32 gebildet. Ein zweiter Flansch 48 wird aus dem zweiten Flanschbereich 10 und der zweiten Flanscherweiterung 34 gebildet.

Nach dem Schmieden des Rohteils 2 werden diese Funktionselemente generativ mittels Laserauftragschweißen auf die Oberfläche 18 oder 20 des Schmiederohteils 2 aufgetragen.

Die Funktionselemente können schichtweise aufgetragen werden. Dies bietet die Möglichkeit an, dass eine Schicht eine Legierungszusammensetzung aufweist und eine andere Schicht eine andere Legierungszusammensetzung aufweist. Vorzugsweise weisen das Rohteil eine erste Legierungszusammensetzung, wie z.B. Ti-64 oder IN625, und mindestens ein Funktionselement eine zweite Legierungszusammensetzung auf, wie z.B. Ti-6242, IN718 und/oder DA718. So ist denkbar, dass ein erstes Funktionselement eine zweite Legierungszusammensetzung aufweist und dass ein anderes Funktionselement eine dritte Legierungszusammensetzung aufweist. Auch kann das einzelne Funktionselement die Legierungszusammensetzung des Rohteils 2 aufweisen.

Neben diesen bereits erwähnten Funktionselementen können noch weitere Funktionselemente auf der Innen- 20 bzw. Außenfläche 18, wie z.B. Haken, Ösen und/oder Referenzanhebungen angeformt sein. Unter Referenzanhebungen sind jede beliebige an der Außenfläche 18 bzw. an der Innenfläche 20 des Rohteils 2 angeformte Anhebungen, die eine bestimmte Lage, bestimmte Maße und eine bestimmte Position zur einem anderen Bauteil aufweisen. Die Referenzanhebungen können knochenförmig sein. Je nach Verfahren kann eine Vorbehandlung der Oberfläche 18 oder 20 erforderlich sein. Vorzugsweiße wird nur ein Aufmaß an Material von maximal 1 mm aufgetragen. Das Aufmaß kann auch nur 0,5 mm betragen.

Somit braucht im Schritt b.) lediglich an den Stellen, an denen sich die späteren Funktionselemente angeordnet sind, Material aufgetragen zu werden, da in diesem Ausführungsbeispiele alle Funktionselemente über die ursprünglichen Flächen 18 und 20 des Rohteils 2 ragen.

Nach dem Auftragen aller Funktionselemente kann das Gehäuse 30 lokal (bspw. induktiv und/oder mit Hilfe eines Laser) bzw. global (über einen Ofen) wärmebehandelt werden, um die Eigenspannung im Material zu reduzieren. Dabei eignen sich Temperaturen von 500° bis 650°C. Diese Wärmebehandlung wird auch als Spannungsarmglühen bezeichnet.

In einem nächsten Schritt c.) wird das Schmiederohteil spanend oder elektro-chemisch nachbearbeitet, so dass Material abgetragen wird. Insbesondere werden nur die Funktionsstellen bzw. Funktionsflächen nachbearbeitet, so dass diese die Endkontur des fertigen Bauteils aufweisen. Zu den Funktionsfläche zählen die senkrecht zur Symmetrieachse A verlaufende erste Fläche 42 des ersten Flansches 46, die in der Figur 3 ganz unten angeordnet ist und horizontal verläuft, und die senkrecht zur Symmetrieachse A verlaufende zweite Fläche 44 des zweiten Flansches 48, die in der Figur 3 ganz oben angeordnet ist und horizontal verläuft. Somit sind beide Flanschflächen 42 und 44 zueinander parallel. Damit wird sichergestellt, dass die an den Flanschen 46 und 48 zu befestigende Bauteile zur Symmetrieachse korrekt ausgerichtet sind. Weitere Funktionsfläche sind an der Außenfläche des Gehäuses 30 denkbar. So kann der in der Figur 3 obere Bereich der Boroskopverstärkung 38 eine weitere Funktionsfläche 50 aufweisen.

Die in der Figur 3 mit Bezugszeichen 52 versehene Bereiche werden als abzutragende Bereiche bezeichnet. Dies bedeutet, dass die entsprechenden Fläche des Gehäuses 30 sich innerhalb des Schmiederohteils 2 befinden. Beispielsweise für stationäre Gasturbinen bräuchten diese Bereiche 52 des Gehäuses 30 aus Kostengründen nicht abgetragen zu werden. Insbesondere spielt das Gewicht bei stationären Gasturbinen eine untergeordnete Rolle. Das Abtragen dieser Bereiche 52 dient insbesondere dazu das Gewicht des Gehäuses 30 zu reduzieren. Bei instationären Gasturbinen dagegen trägt das Gewicht zum Wirkungsgrad bei, so dass der Aufwand betrieben wird das Material entsprechend abzutragen.

Das Gehäuse 30 kann ein Turbinenmittelgehäuse (turbine center frame) oder ein Gehäuse für eine Niederdruckturbine sein.

### Bezugszeichenliste

- 2: Schmiederohteil
- 4: Kegelstumpf
- 6: erster Flanschbereich
- 8: erstes axiales Ende von 4
- 10: zweiter Flanschbereich
- 12: zweites axiales Ende von 4
- 14: erste Anlagefläche von 6
- 16: zweite Anlagefläche von 10
- 18: ursprüngliche Außenfläche von 2
- 20: ursprüngliche Innenfläche von 2
- 30: Gehäuse
- 32: erste Flanscherweiterung
- 34: zweite Flanscherweiterung
- 36: Boroskopauge
- 38: Boroskopverstärkung
- 40: Verstärkungsstrebe
- 42: erster Flanschfläche
- 44: zweite Flanschfläche
- 46: erste Flansch
- 48: zweiter Flansch
- 50: weitere Funktionsfläche
- 52: abzutragender Bereich
- A: Symmetrieachse
- D₁: erster Innendurchmesser von 6
- D₂: zweiter Innendurchmesser von 10

## Patentansprüche

1. Verfahren zur Herstellung eines Bauteils, nämlich ein Gehäuse (30) einer Gasturbine, mit den Schritten:
a. Bereitstellen eines rotationssymmetrischen Schmiederohteils (2),
b. Auftragen von zusätzlichem Material aus mindestens einem Werkstoff auf die Oberfläche des Rohteils (18, 20) an mindestens einer Stelle,
c. Abtragen von Material bis zur Endkontur des fertigen Bauteils (30),
**dadurch gekennzeichnet, dass** in Schritt b.)
- das Auftragen durch Laserauftragschweißen mittels Draht erfolgt und
- das Material derart aufgetragen wird, dass ein Funktionselement des Bauteils entsteht, insbesondere Verstärkungen für Boroskop.

2. Verfahren zur Herstellung eines Bauteils nach Anspruch 1, **dadurch gekennzeichnet, dass** das Schmiederohteil (2) im Wesentlichen die Form eines Kegelstumpfs (4) aufweist.

3. Verfahren zur Herstellung eines Bauteils nach Anspruch 2,
**dadurch gekennzeichnet,**
**dass** an mindestens einem Ende (8, 12) des Kegelstumpfes (4) ein Flanschbereich (6, 10) angeformt ist, der den Kegelstumpf (4) parallel zu dessen Symmetrieachse (A) verlängert.

4. Verfahren zur Herstellung eines Bauteils nach mindestens einem der vorherigen Ansprüche, **dadurch gekennzeichnet, dass** in Schritt b.) das zusätzliche Material mit einem Aufmaß von maximal 1 mm, insbesondere von maximal 0,5 mm, gegenüber der Endkontur aufgetragen wird.

5. Verfahren zur Herstellung eines Bauteils nach mindestens einem der vorherigen Ansprüche, **dadurch gekennzeichnet, dass** in Schritt b.) das zusätzliche Material schichtweise aufgetragen wird.

6. Verfahren zur Herstellung eines Bauteils nach mindestens einem der vorherigen Ansprüche, **dadurch gekennzeichnet, dass** in Schritt b.) nur an der mindestens einen Stelle Material aufgetragen wird, die in der Endkontur aus der ursprünglichen Oberfläche (18, 20) des Schmiederohteils (2) herausragt.

7. Verfahren zur Herstellung eines Bauteils nach mindestens einem der vorherigen Ansprüche, **dadurch gekennzeichnet, dass** in Schritt b.) das Material derart aufgetragen wird, dass ein Funktionselement (32, 34, 36, 38, 40) des Bauteils (30) entsteht.

8. Verfahren zur Herstellung eines Bauteils nach Anspruch 7, **dadurch gekennzeichnet, dass** das Funktionselement ein an einem axialen Ende des Flanschbereichs (6, 10) senkrecht zur Symmetrieachse (A) und radial nach außen verlaufende Flanscherweiterung (32, 34) ist.

9. Verfahren zur Herstellung eines Bauteils nach mindestens einem der vorherigen Ansprüche, **dadurch gekennzeichnet, dass** in Schritt b.) der Werkstoff des zusätzlichen Materials anders ist als der Werkstoff des Schmiederohteils (2).

10. Verfahren zur Herstellung eines Bauteils nach mindestens einem der vorherigen Ansprüche, **dadurch gekennzeichnet, dass** in Schritt c.) Material nur an mindestens einer Funktionsstelle (42, 44, 50) abgetragen wird.

11. Verfahren zur Herstellung eines Bauteils nach mindestens einem der vorherigen Ansprüche, **dadurch gekennzeichnet, dass** in Schritt c.) das Abtragen mechanisch und/oder chemisch erfolgt.

12. Verfahren zur Herstellung eines Bauteils nach mindestens einem der vorherigen Ansprüche, **dadurch gekennzeichnet, dass** zwischen den Schritten a.) und b.) eine Anlagefläche (14, 16) in das Schmiederohteil (2) eingearbeitet wird.

13. Verfahren zur Herstellung eines Bauteils nach mindestens einem der vorherigen Ansprüche, **dadurch gekennzeichnet, dass** zwischen den Schritten b.) und c.) das Schmiederohteil (2) mit zusätzlichem Material wärmebehandelt wird.

14. Bauteil hergestellt nach einem Verfahren nach mindestens einem der vorherigen Ansprüche, **dadurch gekennzeichnet, dass** das Bauteil (30) ein Turbinenmittelgehäuse und/oder ein Gehäuse für eine Niederdruckturbine ist.

## Claims

1. Method for producing a component, specifically a housing (30) of a gas turbine, comprising the steps of:
a. providing a rotationally symmetrical forged blank (2),
b. depositing additional material made from at least one material on the surface of the blank (18, 20) at at least one point,
c. removing material until the final contour of the finished component (30),
**characterized in that**, in step b.),
- deposition is carried out by laser deposition welding using wire, and
- the material is deposited in such a way that a functional element of the component is created, in particular reinforcements for a borescope.

2. Method for producing a component according to claim 1, **characterized in that** the forged blank (2) substantially has the shape of a truncated cone (4).

3. Method for producing a component according to claim 2, **characterized in that** a flange region (6, 10) is formed on at least one end (8, 12) of the truncated cone (4), which flange region lengthens the truncated cone (4) in parallel with its axis of symmetry (A).

4. Method for producing a component according to at least one of the preceding claims, **characterized in that**, in step b.), the additional material is deposited with a machining allowance of at most 1 mm, in particular at most 0.5 mm, compared to the final contour.

5. Method for producing a component according to at least one of the preceding claims, **characterized in that**, in step b.), the additional material is deposited in layers.

6. Method for producing a component according to at least one of the preceding claims, **characterized in that**, in step b.), material is only deposited on the at least one point which protrudes from the original surface (18, 20) of the forged blank (2) in the final contour.

7. Method for producing a component according to at least one of the preceding claims, **characterized in that**, in step b.), the material is deposited in such a way that a functional element (32, 34, 36, 38, 40) of the component (30) is formed.

8. Method for producing a component according to claim 7, **characterized in that** the functional element is a flange extension (32, 34) which extends radially outward at an axial end of the flange region (6, 10) perpendicularly to the axis of symmetry (A).

9. Method for producing a component according to at least one of the preceding claims, **characterized in that**, in step b.), the material of the additional material is different from the material of the forged blank (2).

10. Method for producing a component according to at least one of the preceding claims, **characterized in that**, in step c.), material is removed only at at least one functional point (42, 44, 50).

11. Method for producing a component according to at least one of the preceding claims, **characterized in that**, in step c.), removal is carried out mechanically and/or chemically.

12. Method for producing a component according to at least one of the preceding claims, **characterized in that**, between steps a.) and b.), a contact surface (14, 16) is machined into the forged blank (2).

13. Method for producing a component according to at least one of the preceding claims, **characterized in that**, between steps b.) and c.), the forged blank (2) is heat-treated with additional material.

14. Component manufactured according to a method according to at least one of the preceding claims, **characterized in that** the component (30) is a central turbine housing and/or a housing for a low-pressure turbine.

## Revendications

1. Procédé de fabrication d'un composant, à savoir d'un carter (30) d'une turbine à gaz, comportant les étapes suivantes :
a. la fourniture d'une ébauche de forge (2) à symétrie de révolution,
b. l'application de matière supplémentaire en au moins un matériau sur la surface de l'ébauche (18, 20) à au moins un point,
c. l'enlèvement de matière jusqu'au contour final du composant (30) fini, **caractérisé en ce qu'**à l'étape b.)
- l'application s'effectue par soudage par dépôt au laser à l'aide de fil et
- la matière est appliquée de telle sorte qu'un élément fonctionnel du composant est formé, en particulier des renforts pour boroscopes.

2. Procédé de fabrication d'un composant selon la revendication 1, **caractérisé en ce que** l'ébauche de forge (2) présente sensiblement la forme d'un tronc de cône (4).

3. Procédé de fabrication d'un composant selon la revendication 2, **caractérisé en ce qu'**une zone de bride (6, 10) est formée au niveau d'au moins une extrémité (8, 12) du tronc de cône (4), laquelle prolonge le tronc de cône (4) parallèlement à son axe de symétrie (A).

4. Procédé de fabrication d'un composant selon au moins l'une quelconque des revendications précédentes, **caractérisé en ce qu'**à l'étape b.) la matière supplémentaire est appliquée avec une surépaisseur d'au plus 1 mm, en particulier d'au plus 0,5 mm, par rapport au contour final.

5. Procédé de fabrication d'un composant selon au moins l'une quelconque des revendications précédentes, **caractérisé en ce qu'**à l'étape b.) la matière supplémentaire est appliquée en couches.

6. Procédé de fabrication d'un composant selon au moins l'une quelconque des revendications précédentes, **caractérisé en ce qu'**à l'étape b.) de la matière n'est appliquée qu'au niveau de l'au moins un point, lequel fait saillie dans le contour final depuis la surface (18, 20) d'origine de l'ébauche de forge (2).

7. Procédé de fabrication d'un composant selon au moins l'une quelconque des revendications précédentes, **caractérisé en ce qu'**à l'étape b.) la matière est appliquée de telle sorte qu'un élément fonctionnel (32, 34, 36, 38, 40) du composant (30) est formé.

8. Procédé de fabrication d'un composant selon la revendication 7, **caractérisé en ce que** l'élément fonctionnel est un élargissement de bride (32, 34) s'étendant radialement vers l'extérieur et perpendiculairement à l'axe de symétrie (A) au niveau d'une extrémité axiale de la zone de bride (6, 10).

9. Procédé de fabrication d'un composant selon au moins l'une quelconque des revendications précédentes, **caractérisé en ce qu'**à l'étape b.) le matériau de la matière supplémentaire est différent du matériau de l'ébauche de forge (2).

10. Procédé de fabrication d'un composant selon au moins l'une quelconque des revendications précédentes, **caractérisé en ce qu'**à l'étape c.) de la matière est enlevée uniquement au niveau d'au moins un point fonctionnel (42, 44, 50).

11. Procédé de fabrication d'un composant selon au moins l'une quelconque des revendications précédentes, **caractérisé en ce qu'**à l'étape c.) l'enlèvement s'effectue mécaniquement et/ou chimiquement.

12. Procédé de fabrication d'un composant selon au moins l'une quelconque des revendications précédentes, **caractérisé en ce qu'**entre les étapes a.) et b.) une surface d'appui (14, 16) est intégrée dans l'ébauche de forge (2).

13. Procédé de fabrication d'un composant selon au moins l'une quelconque des revendications précédentes, **caractérisé en ce qu'**entre les étapes b.) et c.) l'ébauche de forge (2) est traitée thermiquement avec de la matière supplémentaire.

14. Composant fabriqué selon un procédé selon au moins l'une quelconque des revendications précédentes, **caractérisé en ce que** ledit composant (30) est un carter central de turbine et/ou un carter pour une turbine basse pression.
